(19) Europäisches Patentamt
European Patent Office
Office européen des brevets

(11) **EP 3 675 473 B1**

(12) **FASCICULE DE BREVET EUROPÉEN**

(45) Date de publication et mention
de la délivrance du brevet:
**05.04.2023   Bulletin 2023/14**

(21) Numéro de dépôt: **19218821.7**

(22) Date de dépôt: **20.12.2019**

(51) Classification Internationale des Brevets (IPC):
**H04M 1/725** *(2006.01)*      **H04M 1/72454** *(2021.01)*

(52) Classification Coopérative des Brevets (CPC):
**H04M 1/72454;** H04M 2250/12

(54) **PROCÉDÉ ET SYSTÈME DE DÉTECTION D'UN MODE DE TRANSPORT AÉRIEN**

DETEKTIONSVERFAHREN UND -SYSTEM EINES LUFTTRANSPORTMODUS

METHOD AND SYSTEM FOR DETECTING AN AIRCRAFT TRANSPORT MODE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité:  **24.12.2018  FR 1874119**

(43) Date de publication de la demande:
**01.07.2020   Bulletin 2020/27**

(73) Titulaire: **Commissariat à l'énergie atomique
et aux énergies alternatives
75015 Paris (FR)**

(72) Inventeur: **VASSILEV, Andréa
38054 GRENOBLE CEDEX 09 (FR)**

(74) Mandataire: **Brevalex
56, Boulevard de l'Embouchure
B.P. 27519
31075 Toulouse Cedex 2 (FR)**

(56) Documents cités:
**US-A1- 2010 248 662      US-A1- 2014 031 082
US-A1- 2014 308 940      US-A1- 2017 104 864
US-A9- 2017 045 359**

**Description**

**DOMAINE TECHNIQUE**

La présente invention concerne le domaine des procédés et systèmes de classification d'un mode de transport et s'applique plus particulièrement à un dispositif portable de détection d'un mode de transport aérien.

**ÉTAT DE LA TECHNIQUE ANTÉRIEURE**

La classification automatique du mode de transport a plusieurs applications comme par exemple l'estimation de l'empreinte carbone ou la planification ou gestion des moyens de transport.

Actuellement, il existe des méthodes qui cherchent à estimer différents modes de transport à partir d'un appareil mobile en utilisant un récepteur de type GPS. En effet, le récepteur GPS permet de calculer l'altitude et la vitesse du moyen de transport. La détection d'un mode de transport aérien peut alors être réalisée en testant l'altitude et la vitesse par rapport à des seuils prédéterminés.

Toutefois, ce genre de méthodes présente plusieurs inconvénients majeurs. Un premier inconvénient concerne le fait que le récepteur GPS repose sur une communication par ondes radio avec un ensemble de satellites. La qualité de cette communication dépend de la sensibilité du récepteur, de l'atténuation des ondes radio due à la carlingue, et de la position relative des satellites par rapport au récepteur. Ceci diminue l'efficacité de détection et tout particulièrement pour un récepteur mobile d'un voyageur dans un avion. Un autre inconvénient est le fait que le GPS est un gros consommateur d'énergie d'environ 150 mW, ce qui a pour conséquence de grever fortement l'autonomie de la batterie de l'appareil mobile en cas d'utilisation prolongée.

Il existe d'autres méthodes qui peuvent détecter certains modes de transport sans utiliser des récepteurs GPS. Une telle méthode est décrite dans le document de X. Xie et al. intitulé « Identifying status based on heterogeneous sensors » US8718672 B2, 2014. Cette méthode utilise des accéléromètres et/ou des baromètres pour détecter les modes de transport ou locomotion suivants : voiture, escalator, ascenseur, marche à pied et escalier. Ce document ne décrit aucune détection de mode avion.

Une autre méthode est décrite dans le document de K. Sankaran et al. Intitulé « Using Mobile Phone Barometer for Low-power Transportation Contest Détection", Proceedings, 12th ACM Conférence on Embedded Network Sensor Systems, pp. 191 - 205, New York, USA, 2014. Cette méthode utilise un baromètre pour détecter les modes de transport en véhicules terrestres ou la marche à pied.

Ces méthodes ne réalisent qu'une classification des modes de transport spécifiques à des véhicules terrestres et ne sont pas adaptées pour des détections dans un avion. En particulier, la technique du deuxième document est basée sur la topographie de la route pour la détection d'un mode de transport en véhicule. En outre, il est fait référence aux documents de l'art antérieur suivants :
US 2017/104864 A1, US 2017/045359 A9, US 2014/031082 A1, US 2010/248662 A1 et US 2014/308940 A1.

L'objet de la présente invention est de proposer un procédé et un système de de détection d'un mode de transport aérien remédiant aux inconvénients précités, en particulier en fournissant un dispositif portable capable de détecter un mode aéronef de manière précise, robuste et avec très peu de consommation d'énergie.

**EXPOSÉ DE L'INVENTION**

L'invention est telle que décrite dans les revendications indépendantes 1 et 8, les formes préférées étant décrites dans les revendications indépendantes 2 à 7. Ainsi, la présente invention est définie par un système de détection d'un mode de transport aérien, comportant :

- un capteur barométrique configuré pour mesurer les valeurs de la pression atmosphérique, et
- une unité de traitement configurée pour acquérir lesdites valeurs de pression et pour identifier si le mode de transport est aérien, dit mode aéronef, en fonction desdites mesures de pression. L'unité de traitement comporte :

  - un module d'acquisition configuré pour acquérir lesdites valeurs de pression à des instants successifs selon une fréquence d'échantillonnage prédéterminée,
  - une mémoire tampon circulaire configurée pour mémoriser un nombre d'échantillons prédéterminé desdites valeurs de pression,
  - un microprocesseur configuré pour calculer la variation de pression entre une valeur courante de pression mesurée à un instant courant et une valeur précédente de pression mesurée à un instant précédent, et pour identifier le mode aéronef en fonction de ladite variation de pression en ne nécessitant aucun signal extérieur au système de détection.

Ce système de détection fait intervenir un test basé sur un taux de variation de la pression en considérant une différence de pression inférieur ou supérieur à un seuil en un temps donné. Ainsi, ce système permet d'identifier automatiquement le mode aéronef de manière robuste en utilisant uniquement des mesures de pression et en consommant très peu d'énergie. En effet, le capteur barométrique est un capteur autonome et stable n'engendrant pas de fonctionnement aléatoire tout en étant un faible consommateur d'énergie (d'environ 1mW). En outre, le système de détection met en oeuvre très peu d'étapes de calcul et ne nécessite aucun signal extérieur.

Selon un premier aspect de la présente invention, le microprocesseur est configuré pour identifier que le mode de transport est un mode aéronef en phase de décollage si ladite variation de pression est inférieure à un premier seuil de pression et si la différence entre lesdits instants courant et précédent est inférieure à une première période temporelle prédéterminée, ledit instant précédent représentant l'instant de début du vol.

Selon un deuxième aspect de la présente invention, le microprocesseur est configuré pour identifier que le mode de transport est un mode aéronef en phase d'atterrissage si ladite variation de pression est supérieure à un deuxième seuil de pression et si la différence entre lesdits instants courant et précédent est inférieure à une deuxième période temporelle prédéterminée, ledit instant courant représentant l'instant de fin du vol.

Avantageusement, le microprocesseur est configuré pour estimer l'empreinte carbone en fonction de la durée du trajet en mode aéronef correspondant à la différence entre les instants des fin et début du vol.

Ceci permet d'estimer l'empreinte carbone d'un utilisateur d'un aéronef de manière automatique, simple et robuste.

Selon l'invention, le nombre d'échantillons prédéterminé de valeurs de pression stockés dans la mémoire tampon circulaire est supérieur à la fréquence d'échantillonnage prédéterminée multipliée par une période temporelle représentant le maximum entre les première et deuxième périodes temporelles prédéterminées.

A titre d'exemple, la fréquence d'échantillonnage prédéterminée est de l'ordre de 1Hz, la première période temporelle prédéterminée est de l'ordre de 1000 secondes, la deuxième période temporelle prédéterminée est de l'ordre de 1500 secondes, le premier seuil de pression est de l'ordre de -150HPa, et le deuxième seuil de pression est de l'ordre de +150HPa.

L'invention vise également un téléphone portable comportant le système de détection selon l'invention.

L'application de détection peut être utilisée très efficacement dans un avion car aucun signal extérieur n'est nécessaire et, par conséquent, l'application n'est pas affectée par une atténuation des ondes radio due à la carlingue.

L'invention vise aussi une puce électronique comportant le système selon l'invention.

Ceci permet par exemple de suivre un colis et d'estimer son empreinte carbone.

L'invention vise également un procédé de détection d'un mode de transport aérien réalisé par un système de détection suivant l'invention.

**BRÈVE DESCRIPTION DES DESSINS**

[Fig. 1] illustre de manière schématique un système de détection d'un mode de transport aérien, selon un mode de réalisation de l'invention ;
[Fig. 2] est un graphe illustrant à titre d'exemple, la variation de pression lors d'un trajet d'un aéronef, selon l'invention ; et
[Fig. 3] illustre de manière schématique les étapes de détection d'un mode de transport aérien en relation avec la Fig. 1, selon un mode de réalisation préféré de l'invention.

**EXPOSÉ DÉTAILLÉ DE MODES DE RÉALISATION PARTICULIERS**

Le principe à la base de l'invention est de proposer une technique de détection d'un mode de transport aérien dit mode aéronef, basée sur des mesures de pression.

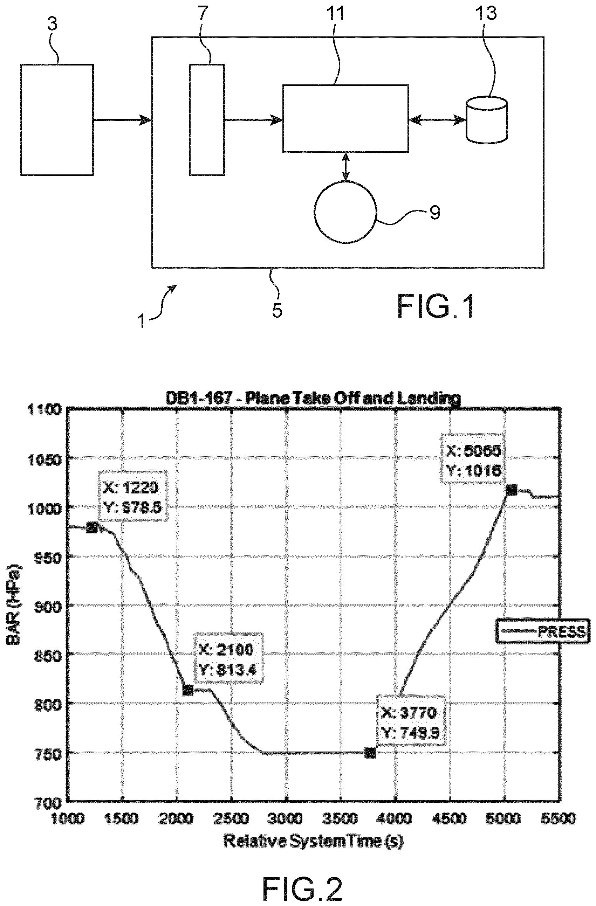

La Fig. 1 illustre de manière schématique un système de détection d'un mode de transport aérien, selon un mode de réalisation de l'invention.

Ce système de détection 1 comporte un capteur barométrique 3 et une unité de traitement 5. Le capteur barométrique 3 est configuré pour mesurer les valeurs de la pression atmosphérique. L'unité de traitement 5 est configurée pour acquérir les valeurs de pression mesurées par le capteur barométrique 3. En outre, l'unité de traitement 5 est configurée pour mettre en oeuvre le fait que la variation de pression est très rapide lors des phases de décollage et d'atterrissage d'un aéronef afin d'identifier si le mode de transport est un mode aéronef ou non en fonction des mesures de pression.

Plus particulièrement, l'unité de traitement comporte un module d'acquisition 7, une mémoire tampon circulaire 9, un microprocesseur 11 et une mémoire 13.

Le module d'acquisition 3 est configuré pour acquérir les valeurs de pression à des instants successifs selon une fréquence d'échantillonnage prédéterminée.

La mémoire tampon circulaire 9 est une structure de données utilisant une mémoire tampon de taille fixe et dont le début et la fin sont considérés comme connectés. La mémoire tampon circulaire 9 est alors configurée pour gérer les flux de données et pour mémoriser un nombre d'échantillons prédéterminé de valeurs de pression.

En outre, le microprocesseur 11 est configuré pour calculer la variation de pression entre une valeur courante de pression mesurée à un instant courant et une valeur précédente de pression mesurée à un instant précédent. Le microprocesseur 11 peut ainsi identifier si le mode de transport est un mode aéronef ou non en fonction de la variation de pression.

La Fig. 2 est un graphe illustrant à titre d'exemple, la variation de pression lors d'un trajet d'un aéronef, selon l'invention.

Ce graphe illustre la pression en fonction du temps et montre que les phases de montée et de descente sont les plus rapides sachant que la consigne de vitesse verticale est inférieure à 2,5 m/s en montée et inférieure à 1,5 m/s en descente. En outre, on sait que la carlingue de l'aéronef est pressurisée à environ 2000 à 2500 m d'altitude (i.e. environ 750 - 800 HPa). Ces caractéristiques sont exploitées par le microprocesseur 11 afin d'identifier le mode aéronef en fonction de la variation de pression.

En effet, le microprocesseur 11 est configuré pour identifier que le mode de transport est un mode aéronef en phase de décollage si la variation de pression est inférieure à un premier seuil de pression et si la différence entre les instants courant et précédent est inférieure à une première période temporelle prédéterminée. Dans ce cas, l'instant précédent représente l'instant de début du vol.

Par ailleurs, le microprocesseur 11 est configuré pour identifier que le mode de transport est un mode aéronef en phase d'atterrissage si la variation de pression est supérieure à un deuxième seuil de pression et si la différence entre les instants courant et précédent est inférieure à une deuxième période temporelle prédéterminée. Dans ce cas, l'instant courant représente l'instant de fin du vol.

Ces instants de début du vol et de fin du vol permettent d'estimer l'empreinte carbone. En effet, le microprocesseur 11 est configuré pour déterminer la durée D du trajet en mode aéronef en calculant la différence entre l'instant $t_f$ de fin du vol et l'instant de début $t_d$ du vol (i.e. D= $t_f$ - $t_d$). Ensuite, le microprocesseur 11 estime l'empreinte carbone en fonction de la durée D du trajet en mode aéronef.

En effet, le bilan carbone B d'un passager dans un aéronef dépend de la vitesse v de l'aéronef, la durée D du trajet et de l'émission E de $CO_2$ par passager par Km selon la formule suivante : B=E*v*D.

Typiquement, la vitesse moyenne d'un avion v= 900 km/h et l'émission de $CO_2$ par passager par Km est E=0,285 kg. Par exemple, pour un vol qui dure 1h30, le bilan carbone d'un passager est B=0,285*900*1,5= 385 kg de $CO_2$.

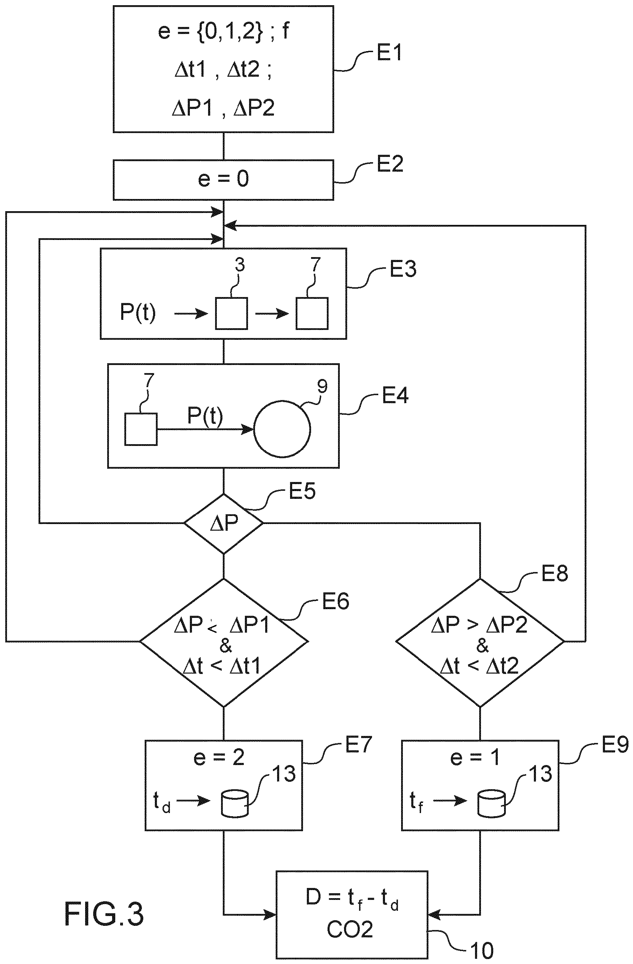

La Fig. 3 illustre de manière schématique les étapes de détection d'un mode de transport aérien en relation avec la Fig. 1, selon un mode de réalisation préféré de l'invention.

L'étape E1 est une étape d'initialisation comportant les paramètres utilisés pour la détection du mode aéronef. On définit d'abord une machine d'état e comportant les trois états suivants : état inconnu e=0 ; mode non aéronef e=1 ; et mode aéronef e=2. Les paramètres de détection comportent en outre les paramètres suivants : première période temporelle prédéterminée Δt1; deuxième période temporelle prédéterminée Δt2; premier seuil de pression ΔP1; deuxième seuil de pression ΔP2; et fréquence d'échantillonnage f prédéterminée.

A titre d'exemple, la fréquence d'échantillonnage f prédéterminée est de l'ordre de 1Hz, la première période temporelle prédéterminée Δt1 est de l'ordre de 1000 secondes, la deuxième période temporelle prédéterminée Δt2 est de l'ordre de 1500 secondes, le premier seuil de pression ΔP1 est de l'ordre de -150HPa, et le deuxième seuil de pression ΔP2 est de l'ordre de +150HPa.

L'étape E2 est le démarrage où la machine d'état est considérée comme étant dans un état inconnu e=0.

A l'étape E3, le capteur barométrique 3 mesure à chaque instant courant t la valeur courante de la pression P(t). Les valeurs de pression sont acquises par le module d'acquisition 7 à des instants successifs selon la fréquence d'échantillonnage prédéterminée qui est selon cet exemple de l'ordre de 1Hz.

A l'étape E4, chaque nouvelle valeur de pression P(t) est mémorisée dans la mémoire tampon circulaire 9. La capacité de cette mémoire est sélectionnée suffisamment grande pour pouvoir contenir un nombre N d'échantillons prédéterminé. Ce nombre d'échantillons pouvant être stockés dans la mémoire 9 est supérieur à la fréquence d'échantillonnage f multipliée par une période temporelle représentant le maximum entre les première Δt1 et deuxième Δt1 périodes temporelles prédéterminées, selon la formule suivante:

$$N > max\ (\Delta t1,\ \Delta t2)^*f$$

Selon l'exemple des valeurs sélectionnées à l'étape E1, le nombre d'échantillons est de l'ordre de 1500. On notera que lorsque la mémoire tampon circulaire 9 est remplie, la nouvelle valeur de pression P(t) est stockée en chassant la plus ancienne valeur.

A l'étape E5, le microprocesseur 11 est configuré pour calculer la variation de pression ΔP entre la valeur courante de pression P(t) mesurée à l'instant courant t et une valeur précédente de pression mesurée à un instant précédent afin de vérifier si la pression reste constante, diminue, ou augmente. Si la variation de pression ΔP est nulle (ΔP=0, i.e. pression est constante), alors on boucle à l'étape E3 pour recommencer les étapes précédentes. Si la variation de pression est négative (ΔP<0, i.e. une baisse de pression), alors on va à l'étape E6. Sinon, c'est-à-dire, si la variation de pression est positive (ΔP>0, i.e. une hausse de pression), alors on va à l'étape E8.

L'étape E6 concerne le cas où la pression baisse (ΔP<0). Alors, à cette étape, le microprocesseur 11 est configuré pour vérifier si la baisse de pression est inférieure au premier seuil de pression ΔP1 « et » (ici le « et » est une conjonction correspondant à l'opérateur combinatoire ET) si la différence Δt entre les instants courant et précédent est inférieure à la première période temporelle Δt1. Si oui (i.e. si ΔP< ΔP1 ET Δt< Δt1) alors, on va à l'étape E7 et sinon, on reboucle à l'étape E3.

A l'étape E7, étant donné que ΔP< ΔP1 ET Δt< Δt1, le microprocesseur 11 identifie que le mode de transport est un mode aéronef en phase de décollage. On considère alors que l'on vient de décoller et que l'on se trouve dans un aéronef. Dans ce cas, la machine d'état passe au mode aéronef (i.e. e=2) et l'instant précédent qui représente l'instant $t_d$ de début du vol est enregistré dans la mémoire 13 de l'unité de traitement 5 et ensuite, on va à l'étape E10.

L'étape E8 concerne le cas où la pression augmente ($\Delta P > 0$). Alors, à cette étape, le microprocesseur 11 est configuré pour vérifier si l'augmentation de pression est supérieure au deuxième seuil de pression $\Delta P2$ « et » si la différence $\Delta t$ entre les instants courant et précédent est inférieure à la deuxième période temporelle $\Delta t2$. Si oui (i.e. si $\Delta P > \Delta P2$ ET $\Delta t < \Delta t2$) alors, on va à l'étape E9 et sinon, on reboucle à l'étape E3.

A l'étape E9, étant donné que $\Delta P > \Delta P2$ ET $\Delta t < \Delta t2$, le microprocesseur 11 identifie que le mode de transport est un mode aéronef en phase d'atterrissage. Donc on considère que l'on vient d'atterrir et que l'on ne se trouve plus en vol. Dans ce cas, la machine d'état passe au mode non aéronef (i.e. e=1) et l'instant courant qui représente l'instant $t_f$ de fin du vol est enregistré dans la mémoire 13 et ensuite, on va à l'étape E10.

A l'étape E10, le microprocesseur est configuré pour déterminer la durée D du trajet en mode aéronef en calculant la différence entre l'instant $t_f$ de fin du vol et l'instant de début $t_d$ du vol (i.e. $D = t_f - t_d$).

A l'étape E10, le microprocesseur est configuré pour estimer l'empreinte carbone ($CO_2$) en fonction de la durée D du trajet en mode aéronef.

Avantageusement, le système 1 de détection selon l'invention est intégré dans un téléphone portable permettant par exemple à son utilisateur d'estimer son bilan carbone.

Par ailleurs, le système de détection 1 selon l'invention est intégré dans une puce électronique qui peut par exemple être associée à une étiquette pour suivre un colis.

## Revendications

1. Système de détection d'un mode de transport aérien, comportant:

   - un capteur barométrique (3) configuré pour mesurer les valeurs de la pression atmosphérique, et
   - une unité de traitement (5) configurée pour acquérir lesdites valeurs de pression et pour identifier si le mode de transport est aérien, dit mode aéronef, en fonction desdites mesures de pression, l'unité de traitement (5) comportant :
   - un module d'acquisition (7) configuré pour acquérir lesdites valeurs de pression à des instants successifs selon une fréquence d'échantillonnage prédéterminée,
   - une mémoire tampon circulaire (9) configurée pour mémoriser un nombre d'échantillons prédéterminé desdites valeurs de pression, ledit nombre d'échantillons prédéterminé de valeurs de pression stockés dans la mémoire tampon circulaire étant supérieur à la fréquence d'échantillonnage prédéterminée multipliée par une période temporelle représentant le maximum entre des première et deuxième périodes temporelles prédéterminées,
   - un microprocesseur (11) configuré pour calculer la variation de pression entre une valeur courante de pression mesurée à un instant courant et une valeur précédente de pression mesurée à un instant précédent, et pour identifier le mode aéronef en fonction de ladite variation de pression en ne nécessitant aucun signal extérieur au système de détection.

2. Système selon la revendication 1, **caractérisé en ce que** le microprocesseur (11) est configuré pour identifier que le mode de transport est un mode aéronef en phase de décollage si ladite variation de pression est inférieure à un premier seuil de pression et si la différence entre lesdits instants courant et précédent est inférieure à la première période temporelle prédéterminée, ledit instant précédent représentant l'instant de début du vol.

3. Système selon la revendication 1, **caractérisé en ce que** le microprocesseur (11) est configuré pour identifier que le mode de transport est un mode aéronef en phase d'atterrissage si ladite variation de pression est supérieure à un deuxième seuil de pression et si la différence entre lesdits instants courant et précédent est inférieure à la deuxième période temporelle prédéterminée, ledit instant courant représentant l'instant de fin du vol.

4. Système selon les revendications 2 et 3, **caractérisé en ce que** le microprocesseur (11) est configuré pour estimer l'empreinte carbone en fonction de la durée du trajet en mode aéronef correspondant à la différence entre les instants des fin et début du vol, le bilan carbone B d'un passager dans l'aéronef dépendant de la vitesse v de l'aéronef, de la durée D du trajet et de l'émission E de $CO_2$ par passager par Km selon la formule suivante : $B = E*v*D$.

5. Système selon l'une quelconque des revendications 2 à 4, **caractérisé en ce que** la fréquence d'échantillonnage prédéterminée est d'environ 1Hz, la première période temporelle prédéterminée est d'environ 1000 secondes, la deuxième période temporelle prédéterminée est d'environ 1500 secondes, le premier seuil de pression est d'environ - 150HPa, et le deuxième seuil de pression est d'environ +150HPa.

6. Téléphone portable comportant le système selon l'une quelconque des revendications précédentes.

7. Puce électronique comportant le système selon l'une quelconque des revendications 1 à 5.

8. Procédé de détection d'un mode de transport aérien réalisé par un système de détection, le procédé comporte les étapes suivantes :

> - réaliser au moyen d'un capteur barométrique (3) des mesures de la pression atmosphérique,
> - acquérir au moyen d'un module d'acquisition (7) lesdites valeurs de pression à des instants successifs selon une fréquence d'échantillonnage prédéterminée,
> - mémoriser au moyen d'une mémoire tampon circulaire (9) un nombre d'échantillons prédéterminé desdites valeurs de pression, ledit nombre d'échantillons prédéterminé de valeurs de pression stockés dans la mémoire tampon circulaire étant supérieur à la fréquence d'échantillonnage prédéterminée multipliée par une période temporelle représentant le maximum entre des première et deuxième périodes temporelles prédéterminées,
> - calculer au moyen d'un microprocesseur (11) la variation de pression entre une valeur courante de pression mesurée à un instant courant et une valeur précédente de pression mesurée à un instant précédent, et
> - identifier au moyen du microprocesseur (11) si le mode de transport est aérien, dit mode aéronef, en fonction de ladite variation de pression en ne nécessitant aucun signal extérieur au système de détection.

**Patentansprüche**

1. System zum Detektieren eines Lufttransportmodus, Folgendes beinhaltend:

> - einen barometrischen Sensor (3), der konfiguriert ist, um die Werte des atmosphärischen Drucks zu messen;
> - eine Behandlungseinheit (5), die konfiguriert ist, um die Druckwerte zu erfassen, und um in Abhängigkeit von den Druckmessungen zu identifizieren, ob der Transportmodus fliegerisch, Flugzeugmodus genannt, ist, wobei die Behandlungseinheit (5) Folgendes beinhaltet:
> - ein Erfassungsmodul (7), das konfiguriert ist, um die Druckwerte zu aufeinanderfolgenden Zeitpunkten entsprechend einer vorbestimmten Probennahme-Frequenz zu erfassen,
> - einen Ringpufferspeicher (9), der konfiguriert ist, um eine vorbestimmte Anzahl an Probennahmen der Druckwerte zu speichern, wobei die vorbestimmte Anzahl an Probennahmen von Druckwerten, die in dem Ringpufferspeicher abgelegt sind, größer als die vorbestimmte Probennahme-Frequenz multipliziert mit einer Zeitdauer ist, die den Höchstwert zwischen vorbestimmten ersten und zweiten Zeitdauern repräsentiert,
> - einen Mikroprozessor (11), der konfiguriert ist, um die Druckvariation zwischen einem zu einem gegenwärtigen Zeitpunkt gemessenen gegenwärtigen Druckwert, und einem zu einem vorherigen Zeitpunkt gemessenen vorherigen Druckwert zu berechnen, und um den Flugzeugmodus in Abhängigkeit von der Druckvariation zu identifizieren, indem kein Signal außerhalb des Systems zum Detektieren benötigt wird.

2. System nach Anspruch 1, **dadurch gekennzeichnet, dass** der Mikroprozessor (11) konfiguriert ist, um zu identifizieren, dass der Transportmodus ein Flugzeugmodus in einer Abhebephase ist, wenn die Druckvariation kleiner als eine erste Druckschwelle ist, und wenn der Unterschied zwischen dem gegenwärtigen und vorherigen Zeitpunkt kleiner als die erste vorbestimmte Zeitdauer ist, wobei der vorherige Zeitpunkt den Anfangszeitpunkt des Fluges repräsentiert.

3. System nach Anspruch 1, **dadurch gekennzeichnet, dass** der Mikroprozessor (11) konfiguriert ist, um zu identifizieren, dass der Transportmodus ein Flugzeugmodus in einer Landephase ist, wenn die Druckvariation größer als eine zweite Druckschwelle ist, und wenn der Unterschied zwischen dem gegenwärtigen und vorherigen Zeitpunkt kleiner als die zweite vorbestimmte Zeitdauer ist, wobei der gegenwärtige Zeitpunkt den Endzeitpunkt des Fluges repräsentiert.

4. System nach den Ansprüchen 2 und 3, **dadurch gekennzeichnet, dass** der Mikroprozessor (11) konfiguriert ist, um die Kohlenstoffbilanz in Abhängigkeit von der Streckendauer im Flugzeugmodus zu schätzen, die dem Unterschied zwischen den Zeitpunkten des Endes und Anfangs des Fluges entspricht, wobei die Kohlenstoffbilanz B eines Passagiers in dem Flugzeug von der Geschwindigkeit v des Flugzeugs, von der Dauer D der Strecke und der $CO_2$-Emission E je Passagier je km entsprechend der folgenden Formel abhängig ist: $B=E*v*D$.

5. System nach einem der Ansprüche 2 bis 4, **dadurch gekennzeichnet, dass** die vorbestimmte Probennahme-Frequenz etwa 1Hz beträgt, die erste vorbestimmte Zeitdauer etwa 1000 Sekunden beträgt, die zweite vorbestimmte Zeitdauer etwa 1500 Sekunden beträgt, die erste Druckschwelle etwa -150 HPa beträgt und die zweite Druckschwelle etwa +150 HPa beträgt.

**6.** Mobiltelefon, das das System nach einem der vorstehenden Ansprüche beinhaltet.

**7.** Elektronikchip, der das System nach einem der Ansprüche 1 bis 5 beinhaltet.

**8.** Verfahren zum Detektieren eines Lufttransportmodus, das durch ein System zum Detektieren durchgeführt wird, wobei das Verfahren die folgenden Schritte beinhaltet:

- Durchführen anhand eines barometrischen Sensors (3) der Messungen des atmosphärischen Drucks,
- Erfassen anhand eines Erfassungsmoduls (7) der Druckwerte zu aufeinanderfolgenden Zeitpunkten entsprechend einer vorbestimmten Probennahme-Frequenz,
- Speichern anhand eines Ringpufferspeichers (9) einer vorbestimmten Anzahl an Probennahmen der Druckwerte, wobei die vorbestimmte Anzahl an Probennahmen von Druckwerten, die in dem Ringpufferspeicher abgelegt sind, größer als die vorbestimmte Probennahme-Frequenz multipliziert mit einer Zeitdauer ist, die den Höchstwert zwischen vorbestimmten ersten und zweiten Zeitdauern repräsentiert,
- Berechnen anhand eines Mikroprozessors (11) der Druckvariation zwischen einem zu einem gegenwärtigen Zeitpunkt gemessenen gegenwärtigen Druckwert, und einem zu einem vorherigen Zeitpunkt gemessenen vorherigen Druckwert, und
- Identifizieren anhand des Mikroprozessors (11), ob der Transportmodus fliegerisch, Flugzeugmodus genannt, ist, in Abhängigkeit von der Druckvariation, indem kein Signal außerhalb des Systems zum Detektieren benötigt wird.

**Claims**

**1.** Air transport mode detection system, comprising:

- a barometric sensor (3) configured to measure the values of the atmospheric pressure, and
- a processing unit (5) configured to acquire said pressure values and to identify if the transport mode is air transport, called aircraft mode, depending on said pressure measurements, the processing unit (5) comprising:
- an acquisition module (7) configured to acquire said pressure values at successive instants at a predetermined sampling frequency,
- a circular buffer memory (9) configured to memorise a predetermined number of samples of said pressure values, said predetermined number of samples of pressure values stored in the circular buffer memory being greater than the predetermined sampling frequency multiplied by a time period representing the maximum between first and second predetermined time periods,
- a microprocessor (11) configured to calculate the pressure variation between a current pressure value measured at a current instant and a previous pressure value measured at a previous instant and to identify the aircraft mode as a function of said pressure variation without needing any signal outside the detection system.

**2.** System according to claim 1, **characterised in that** the microprocessor (11) is configured to identify that the transport mode is an aircraft mode during the takeoff phase if said pressure variation is less than a first pressure variation and if the difference between said current and previous instants is less than the first predetermined time period, said previous instant representing the start of flight instant.

**3.** System according to claim 1, **characterised in that** the microprocessor (11) is configured to identify that the transport mode is an aircraft mode during the landing phase if said pressure variation is greater than a second pressure threshold and if the difference between said current and previous instants is smaller than a second predetermined time period, said current instant representing the end of flight instant.

**4.** System according to claims 2 and 3, **characterised in that** the microprocessor (11) is configured to estimate the carbon footprint as a function of the path in aircraft mode corresponding to the difference between start and end of flight instants, the carbon footprint B of an aircraft passenger depending on the speed v of the aircraft, the duration D of the path and of the emission E of $CO_2$ by passenger by Km according to the following equation: $B = E*v*D$.

**5.** System according to any one of the preceding claims 2 to 4, **characterised in that** the predetermined sampling frequency is about 1Hz, the first predetermined time period is about 1000 seconds, the second predetermined time period is about 1500 seconds, the first pressure threshold is about -150HPa, and the second pressure threshold is about +150HPa.

**6.** Smartphone comprising the system according to any one of the preceding claims.

**7.** Electronic chip comprising the system according to any one of claims 1 to 5.

**8.** Air transport mode detection method made by a detection system, the method comprises the following steps:

- make measurements using a barometric sensor (3) of the atmospheric pressure,
- acquire using a processing unit (5) said pressure values at successive instants at a predetermined sampling frequency,
- memorise using a circular buffer memory (9) a predetermined number of samples of said pressure values, said predetermined number of samples of pressure values stored in the circular buffer memory being greater than the predetermined sampling frequency multiplied by a time period representing the maximum between first and second predetermined time periods,
- calculate using a microprocessor (11) the pressure variation between a current pressure value measured at a current instant and a preceding pressure value measured at a previous instant, and
- identify using the microprocessor (11) if the transport mode is by air, called aircraft mode, as a function of said pressure variation without needing any signal outside the detection system.

FIG.1

**DB1-167 - Plane Take Off and Landing**

FIG.2

FIG.3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 8718672 B2, X. Xie
- US 2017104864 A1
- US 2017045359 A9
- US 2014031082 A1
- US 2010248662 A1
- US 2014308940 A1

**Littérature non-brevet citée dans la description**

- **K. SANKARAN et al.** Using Mobile Phone Barometer for Low-power Transportation Contest Détection. *Proceedings, 12th ACM Conférence on Embedded Network Sensor Systems,* 2014, 191-205